Europäisches Patentamt

European Patent Office

Office européen des brevets

(19)

(11) Numéro de publication : **0 115 456 B1**

(12) **FASCICULE DE BREVET EUROPÉEN**

(45) Date de publication du fascicule du brevet :
12.11.86

(21) Numéro de dépôt : **84400134.7**

(22) Date de dépôt : **20.01.84**

(51) Int. Cl.⁴ : **F 28 C 3/18**, F 28 F 5/02//
A23B7/06, A23B7/04

(54) **Dispositif pour traiter un flux de produits solides au moyen d'un flux de liquide, notamment pour refroidir des légumes.**

(30) Priorité : 31.01.83 FR 8301470

(43) Date de publication de la demande :
08.08.84 Bulletin 84/32

(45) Mention de la délivrance du brevet :
12.11.86 Bulletin 86/46

(84) Etats contractants désignés :
BE CH DE GB IT LI NL

(56) Documents cités :
EP-A- 0 065 791
FR-A- 1 575 644
FR-A- 2 092 559
FR-A- 2 119 571
FR-A- 2 480 623
GB-A- 1 146 017

(73) Titulaire : **SOCIETE FRANCO EUROPEENNE DE MATERIEL POUR L'INDUSTRIE ALIMENTAIRE "F.E.M.I.A."**
**16 rue Jacques Kellner**
**F-75017 Paris (FR)**

(72) Inventeur : **Coppolani, Joseph**
**2 rue de la Station**
**F-92360 Meudon La Forêt (FR)**
Inventeur : **Plantier, André**
**31 avenue Ducis**
**F-92500 Rueil Malmaison (FR)**

(74) Mandataire : **Portal, Gérard et al**
**Cabinet Z. Weinstein 20, Avenue de Friedland**
**F-75008 Paris (FR)**

## Description

La présente invention concerne un dispositif pour traiter un flux de produits solides à contre-courant avec un flux de liquide, pour réaliser un échange thermique, physique et/ou chimique entre ces deux flux.

La présente invention a plus particulièrement pour objet un dispositif pour refroidir des légumes chauds par circulation d'eau à contre-courant, notamment en réalisant une trempe intermittente des légumes.

On connaît, notamment par le document FR-A-2 119 571, un procédé et des dispositifs pour traiter un flux de produits solides à contre-courant avec un flux de liquide pour réaliser un échange thermique, physique et/ou chimique entre ces deux flux, par exemple pour refroidir des légumes, comprenant un tambour tournant autour de son axe longitudinal, une hélice ou vis sans fin disposée à l'intérieur dudit tambour, solidaire en rotation avec celui-ci, le bord de chaque spire de l'hélice venant en contact avec la surface interne du tambour pour définir des compartiments, et des moyens d'alimentation en produits et liquide pour alimenter les produits et le liquide respectivement à chaque extrémité dudit tambour, comprenant dans chacun desdits compartiments un élément formant aube fixé sur la face interne du tambour entre deux spires adjacentes de l'hélice pour freiner la progression des produits dans ledit tambour et un moyen laissant passer le liquide d'un compartiment au compartiment amont suivant par rapport au sens de progression des produits solides dans le tambour, et retenant les produits dans ledit compartiment.

Selon ce document, la séparation entre le produit et le liquide est réalisée par une surface perforée, disposée dans chaque compartiment et, à travers laquelle le liquide tombe par gravité. Les dispositifs utilisant la gravité pour déplacer le liquide présentent un inconvénient majeur résidant dans le fait que le tambour doit être incliné. Par ailleurs, dans le dispositif comprenant une surface perforée dans chaque compartiment pour séparer les produits solides du liquide par chute, sous l'effet de la gravité, du liquide à travers la perforation, on rencontre souvent une accumulation des matières sous les cloisons verticales de séparation du tambour en compartiments et des risques d'obturation des perforations. De plus, l'accès à ces surfaces est relativement difficile, ce qui rend difficile le nettoyage du dispositif.

La présente invention a pour but, notamment, de remédier à ces inconvénients en proposant un dispositif dans lequel les produits solides sont déplacés de manière continue depuis une extrémité du tambour vers son autre extrémité par des moyens mécaniques, tandis que le liquide est déplacé par des moyens mécaniques, dans ledit tambour, pas à pas, à contre-courant des produits solides, et est séparé de ces produits à travers une paroi perforée, sous l'effet d'une compression exercée par les moyens mécaniques d'avancement du produit.

A cet effet, l'invention propose un dispositif pour traiter un flux de produits solides, à contre-courant avec un flux de liquide, pour réaliser un échange thermique, physique et/ou chimique entre ces deux flux, par exemple pour refroidir des légumes, tel que revendiqué à la revendication 1 ; c'est-à-dire que le dispositif est du type précédemment décrit dans le document FR-A-2 119 571 et caractérisé en ce que le moyen précité laissant passer le liquide est formé au niveau de chaque aube dans la spire de l'hélice située en amont de l'aube associée selon le sens de progression des produits solides dans le tambour, et est situé immédiatement et en amont de la surface supérieure de chaque aube selon le sens de rotation du tambour.

Selon une autre caractéristique de l'invention, le moyen précité laissant passer le liquide d'un compartiment au compartiment amont suivant est constitué par des perforations réalisées dans la partie précitée de la spire amont précitée.

Ainsi, quand l'eau et les produits seront bloqués en rotation par l'aube, celle-ci provoquera une compression sur le liquide qui le forcera à traverser les perforations de la spire située du côté amont de l'aube, étant donné que la spire située du côté aval ne comprend aucune perforation au voisinage de ladite aube.

Avantageusement, le tambour précité est un tambour cylindrique à axe longitudinal sensiblement horizontal.

Selon encore une autre caractéristique de l'invention, l'aube précitée est une cloison fixée par un de ses côtés sur la face interne du tambour et formant un angle compris entre environ 20° et environ 60°, de préférence égal à 40° environ, avec le plan diamétral du tambour passant par ladite ligne de contact entre le côté de l'aube et la face interne du tambour.

Par ailleurs, la longueur de l'aube précitée est comprise entre environ 0,3 et environ 0,5 fois le diamètre du tambour, et, de préférence, égale à environ 0,4 fois ledit diamètre.

Selon encore une autre caractéristique de l'invention, deux aubes précitées successives selon la direction longitudinale du tambour sont fixées de manière décalée angulairement l'une par rapport à l'autre sur la circonférence dudit tambour.

Avantageusement cet angle de décalage est compris entre environ 90° et environ 270°, et détermine le temps de contact entre les produits et le liquide.

Par ailleurs, les aubes précitées sont des dièdres dont le côté amont par rapport au sens de rotation du tambour forme l'aube proprement dite, le côté aval formant un côté de support pour ladite aube.

De plus, ce côté aval présente l'avantage d'éviter le passage des produits sous l'aube.

Selon encore une autre caractéristique de l'invention, l'hélice ou la vis sans fin précitée est constituée par une bande de matériau de largeur déterminée, enroulée en forme d'hélice.

L'alimentation du liquide dans le tambour est discontinue, tandis que l'alimentation des produits solides peut être discontinue ou continue selon que le compartiment situé du côté de l'alimentation des produits est obturé par un élément formant cloison d'obturation, disposé entre les deux premières spires de l'hélice, ou qu'un disque annulaire comprenant des perforations sur au moins une partie de sa surface est fixé à l'extrémité du tambour, associée à l'alimentation des produits solides.

D'autres caractéristiques, détails et avantages de l'invention apparaîtront plus clairement à la lumière de la description explicative qui va suivre d'un mode de réalisation du dispositif de l'invention donné uniquement à titre d'exemple et faite en référence aux dessins schématiques non limitatifs annexés dans lesquels :

la figure 1 est une représentation en perspective du dispositif de l'invention ;

la figure 2 est une projection sur un plan selon la flèche II de la figure 1 du dispositif de l'invention ;

les figures 3 à 6 sont des représentations schématiques illustrant la progression du liquide et des produits dans le dispositif de l'invention, en fonction de la rotation du tambour ; et

la figure 7 est un diagramme illustrant la progression (A) du produit et du liquide selon la direction longitudinale du tambour en fonction du nombre $(T_R)$ de rotations de celui-ci.

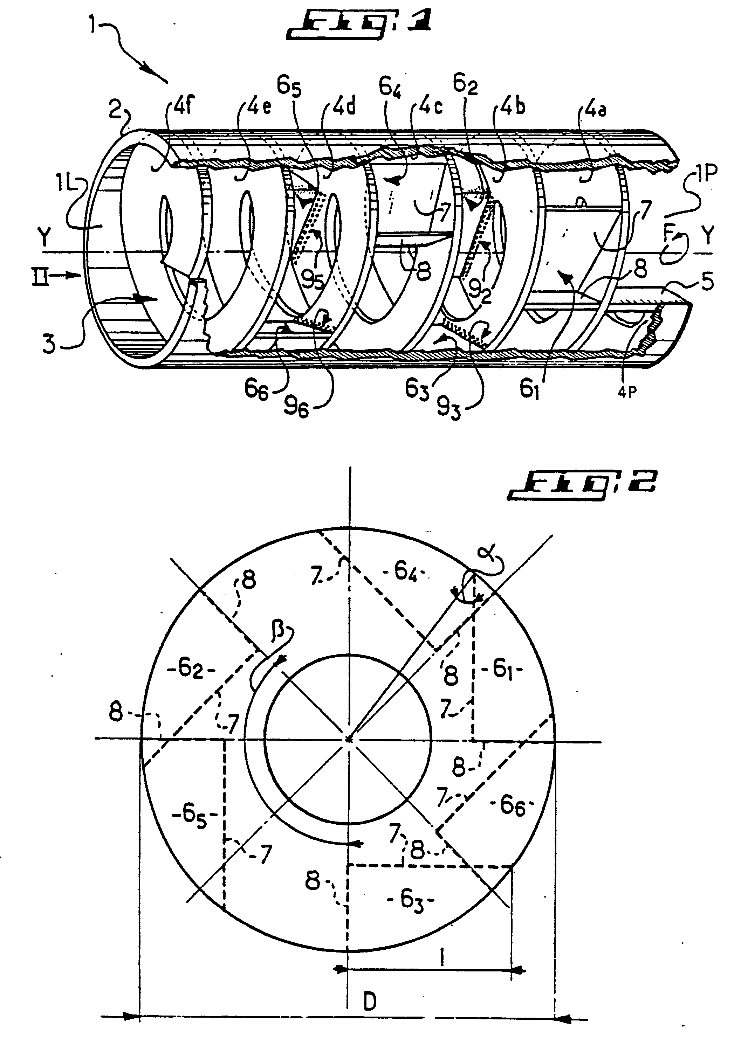

Le dispositif de l'invention comprend essentiellement un tambour 1 illustré aux figures 1, et 3 à 6, des moyens pour mettre en rotation ce tambour 1 autour de son axe longitudinal Y-Y, des moyens pour alimenter des produits solides P à une extrémité 1P du tambour, des moyens pour alimenter un liquide L à l'autre extrémité 1L de ce tambour, et enfin des moyens pour collecter ou recueillir les produits solides P traités sortant par l'extrémité 1L du tambour, et le liquide L évacué à l'extrémité 1P. Eventuellement, le dispositif peut comprendre des moyens pour traiter, si nécessaire, et recycler le liquide L dans le tambour.

Pour plus de clarté, ces différents moyens, qui sont connus en soi, ne sont pas représentés sur les figures annexées.

En se référant aux figures 1 et 3 à 6, on décrira, plus particulièrement, le tambour 1 du dispositif de l'invention qui permet de traiter un flux de produits solides P tels que par exemple des légumes chauds, par un flux de liquide L tel que par exemple un courant d'eau froide.

Bien entendu, le dispositif de l'invention peut être utilisé pour traiter tout solide ou liquide, respectivement par un liquide ou un solide. Ainsi, il peut être utilisé comme réacteur pour réaliser une réaction chimique entre des produits solides et un liquide, ou pour purifier un produit solide, par exemple, par solubilisation ou entraînement des impuretés par un flux liquide.

Ces exemples montrent donc que le dispositif de l'invention qui est particulièrement adapté pour le refroidissement des légumes, peut être utilisé dans de nombreuses autres applications nécessitant un échange de matières, de calories ou autres, entre un produit solide et un liquide.

Le tambour 1 est, dans le mode de réalisation illustré et préféré de l'invention, un cylindre 2 ouvert aux deux bouts et monté sensiblement horizontalement sur des moyens de support et les moyens d'entraînement en rotation, déjà cités, de façon à entraîner le tambour 1 en rotation dans le sens illustré par la flèche F, autour de son axe longitudinal horizontal Y-Y. Ce cylindre a un diamètre intérieur D.

L'intérieur de ce cylindre est divisé en un certain nombre de compartiments par une hélice ou vis sans fin 3 dont le bord extérieur des spires est en contact avec la face interne du cylindre 2.

Dans le mode de réalisation illustré et préféré de l'invention, cette hélice ou vis sans fin 3 est constituée par une bande de matériau de largeur déterminée qui est enroulée de manière hélicoïdale. Ainsi, l'hélice 3 présente un passage axial défini par le bord interne des spires 4.

Dans le mode de réalisation représenté de l'invention, une cloison 5 est fixée entre l'extrémité 4P de l'hélice 3 située à l'extrémité 1P du tambour 1, et la paroi de la spire adjacente 4a pour ainsi obturer le compartiment défini par les spires 4a, 4b et retenir le produit solide P alimenté dans ce compartiment.

Dans une variante du dispositif de l'invention, cette cloison 5 peut être supprimée et remplacée par un disque annulaire fixé sur l'extrémité 1P du tambour 1, ce disque comprenant sur au moins une partie de sa surface, des perforations pour permettre l'évacuation du liquide L hors du tambour 1.

Selon l'invention, dans chaque compartiment est disposé au moins un élément 6 formant aube. Ainsi, dans l'exemple illustré, le tambour 1 comprend six aubes $6_1$, $6_2$, $6_3$, $6_4$, $6_5$, $6_6$ fixées dans chacun des six compartiments définis par les spires 4 de l'hélice 3, à l'exception du premier compartiment adjacent à l'extrémité 1P du tambour, d'alimentation en produits solides. La cloison 5 d'obturation est située en aval de l'aube $6_1$, selon le sens de rotation F du tambour.

Ces aubes sont formées, dans le mode de réalisation illustré, par un dièdre fixé sur la face interne du tambour 1 entre deux spires adjacentes de l'hélice 3. La paroi 7 amont, par rapport au sens F de rotation du tambour, de ce dièdre forme l'aube proprement dite, et est fixée sur la face interne du tambour 1 par un de ses bords. La paroi aval 8 de ce dièdre est simplement une paroi ou cloison de support de l'autre bord de la paroi ou cloison 7. De plus, cette cloison 8 permet d'éviter le passage des produits solides ou du liquide sous la cloison 7.

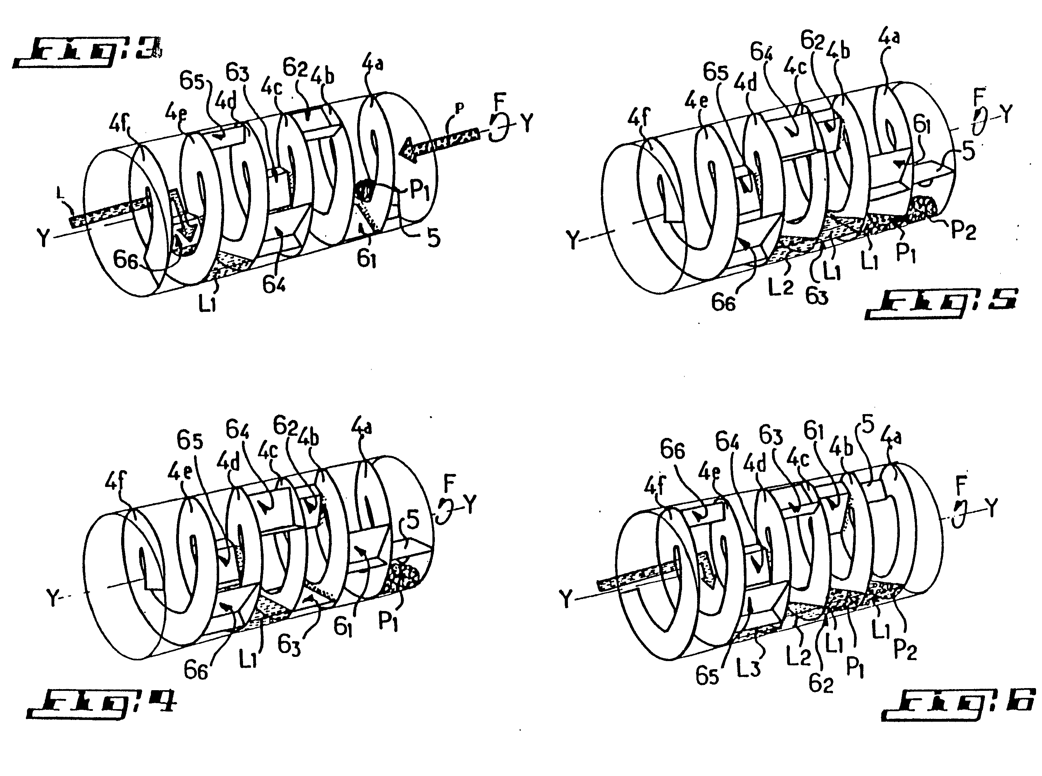

Comme cela est visible à la figure 2, les aubes $6_1$, $6_2$, $6_3$, $6_4$, $6_5$, $6_6$ sont décalées angulairement les unes des autres sur le pourtour du cylindre 2, l'angle β de décalage entre deux chicanes adjacentes est, avantageusement, constant sur toute la longueur du tambour. Il est compris entre environ 90° et environ 270°. Cet angle permet de déterminer le temps de contact entre les produits et le liquide.

Par ailleurs, la longueur l utile de l'aube, en d'autres termes la longueur de la paroi 7 du dièdre est comprise entre environ 0,3 et environ 0,5 fois le diamètre D du tambour, de préférence, égale à environ 0,4 fois ce diamètre D.

Par ailleurs, la cloison 7 de l'aube 6 forme un angle $\alpha$ compris entre environ 20° et environ 60°, de préférence égale à 40° environ avec le plan diamétral du tambour passant par la ligne de contact du bord 7a de la cloison 7 et la face interne du cylindre 2.

Selon l'invention, le tambour 1 comprend également des moyens pour laisser passer le liquide L d'un compartiment vers l'autre selon une direction de progression opposée à celle du solide P, comme cela sera décrit ultérieurement. Ce moyen est constitué par des perforations 9 réalisées dans les spires 4 de l'hélice 3. Ces perforations sont réalisées au niveau de chaque aube 6 uniquement dans la spire située en amont de l'aube associée, selon le sens de progression des produits solides P dans le tambour 1, illustré par la flèche P, par exemple dans la spire 4a associée à la chicane $6_1$ tandis que la spire 4b ne comprend aucune perforation au niveau de la chicane $6_1$. Ces perforations sont réalisées immédiatement au-dessus et en amont de la surface supérieure de la cloison 7 des chicanes 6, par rapport au sens F de rotation du tambour.

Ces perforations peuvent être soit réalisées par une pluralité de trous usinés dans l'hélice 3, soit être une partie formant grille de l'hélice 3.

Par ailleurs, l'angle du dièdre de chaque chicane 6 est, dans le mode de réalisation illustré, un angle droit. Toutefois, cet angle peut être quelconque, et même la cloison 8 peut être omise sans pour cela sortir du cadre de l'invention.

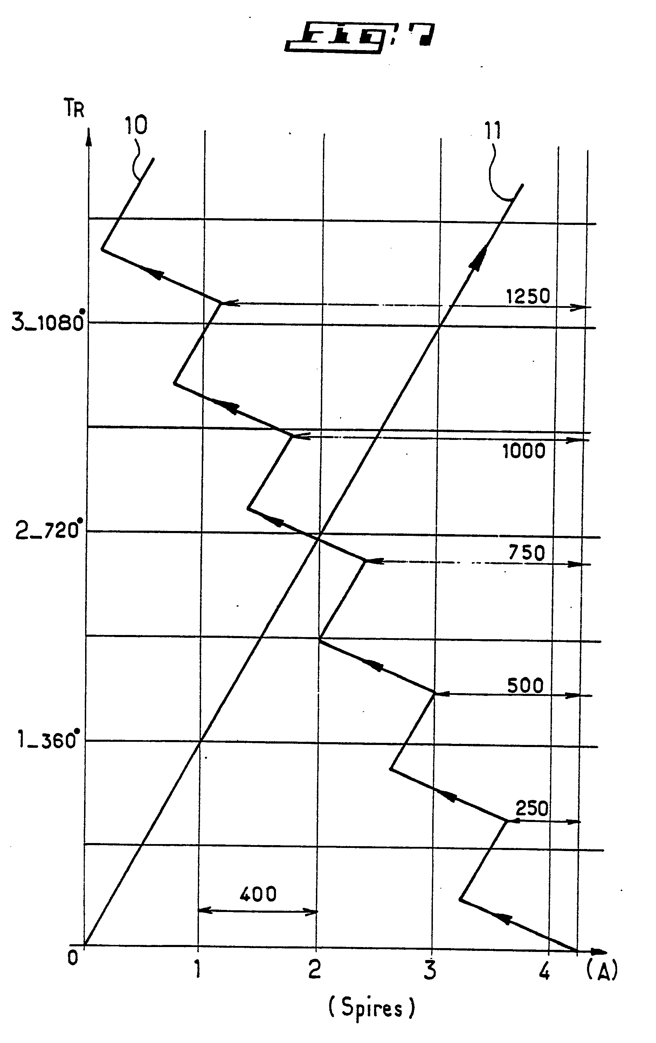

On décrira maintenant en se référant aux figures 3 à 7 le fonctionnement du dispositif de l'invention.

La figure 3 illustre le démarrage du dispositif de l'invention. Pour cela, on alimente une première quantité ou unité de produit $P_1$ en aval de la cloison 5 entre les spires 4a, 4b de l'hélice 3 et une première quantité ou unité de liquide $L_1$ entre les spires 4e, 4f juste en amont de la chicane $6_6$, comme illustré respectivement par les flèches P et L.

Le tambour est alors mis en rotation selon la flèche F, la figure 4 illustrant la position de l'unité $P_1$ de produits solides et de l'unité $L_1$ de liquide dans le tambour après une rotation du tambour d'environ 90°. L'unité $P_1$ de produits solides a progressé dans le tambour de manière régulière conformément au pas de l'hélice 3. Au contraire, l'unité de liquide $L_1$ a été comprimée par l'aube $6_6$ et forcée à traverser les perforations $9_6$ pour passer ainsi dans le compartiment suivant défini par les spires 4e et 4d de l'hélice 3.

Donc, dans le tambour 1, l'hélice 3 provoquera une progression régulière et linéaire des produits P, illustrée par la courbe 11 de la figure 7, pour les amener depuis l'extrémité 1P du tambour vers l'extrémité 1L, tandis que chaque unité de liquide L aura une progression pas à pas dans le tambour, correspondant au décalage angulaire des aubes 6 sur le pourtour du tambour. Ainsi, chaque aube 6 forme une aube de compression coopérant avec les spires adjacentes pour forcer le liquide à traverser les perforations 9 et ainsi le faire progresser depuis l'extrémité 1L du tambour 1 vers l'extrémité 1P, comme cela est illustré par la courbe 10 du diagramme de la figure 7.

On alimentera donc une autre unité de liquide $L_2$ et une autre unité de produits solides $P_2$ à chaque tour du tambour, comme illustré à la figure 5.

Toutefois, dans la variante de l'invention comprenant un disque annulaire fixé à l'extrémité 1P du tambour 1, il est possible d'alimenter en continu les produits solides P dans ce tambour.

Aux figures 5 et 6 on a représenté la position de deux unités de liquide $L_1$, $L_2$ et deux unités de produits solides $P_1$, $P_2$, quand la première unité de liquide $L_1$ vient en contact avec la première unité de produit $P_1$.

Quand l'ensemble des deux unités produits solide $P_1$ et liquide $L_1$ arrivent sur l'aube 5, comme illustré à la figure 6, la compression exercée par l'aube sur le liquide et le solide freine d'une part la progression du solide, ce qui a pour résultat d'augmenter le temps de contact entre le liquide et le solide, et d'autre part provoque le passage de l'unité de liquide $L_1$, à travers les perforations $9_2$ pour ainsi la faire passer dans le compartiment suivant et venir en contact avec l'unité $P_2$ de produits solides. L'unité de produits solides $P_1$ continue sa progression dans le tambour 1 en basculant au-dessus de l'arête dudit dièdre de l'aube $6_2$, et viendra en contact avec l'unité de liquide $L_2$ suivante dès que l'aube $6_3$ aura forcé cette unité de liquide $L_2$ à passer à travers les perforations $9_3$ de la spire 4c. Donc, dans l'exemple illustré chaque unité de produit solide sera en contact avec une unité de liquide pendant 315° environ de rotation, pour une rotation d'un tour du tambour. Bien entendu, ce temps de contact est fonction de l'angle de décalage entre deux aubes adjacentes.

L'invention propose donc un dispositif permettant de traiter un produit solide tel qu'un légume, à contre-courant avec un flux de liquide tel que de l'eau pour réaliser le refroidissement du légume. Le liquide est forcé par les aubes de compression de progresser pas à pas dans le tambour 1, tandis que les produits solides sont déplacés dans ledit tambour d'une manière continue par l'hélice 3. La surface des moyens de séparation 9 est auto-nettoyée par le frottement des produits solides qui entraîne les produits adhérents, et par le passage sous pression du liquide.

**Revendications**

1. Dispositif pour traiter un flux de produits solides, à contre-courant avec un flux de liquide, pour réaliser un échange thermique, physique et/ou chimique entre ces deux flux, par exemple pour refroidir des légumes, comprenant un tambour tournant autour de son axe longitudinal, une hélice ou vis sans fin disposée à l'intérieur dudit tambour, solidaire en rotation avec celui-ci, le bord de chaque spire de l'hélice venant en contact avec la surface interne du tambour pour définir des compartiments, et des moyens d'alimentation en produits et liquide pour alimenter les produits et le liquide respectivement à chaque extrémité dudit tambour, comprenant dans chacun desdits compartiments au moins un élément formant aube fixé sur la face interne du tambour entre deux spires adjacentes de l'hélice pour freiner la progression des produits dans ledit tambour et un moyen laissant passer le liquide d'un compartiment au compartiment amont suivant par rapport au sens de progression des produits solides dans le tambour, et retenant les produits dans ledit compartiment, caractérisé en ce que ledit moyen (9) est formé au niveau de chaque aube (6) dans la spire (4) de l'hélice (3) située en amont de l'aube associée selon le sens de progression des produits solides (P) dans le tambour (1) et est située immédiatement au-dessus et en amont de la surface supérieure de chaque aube (6) selon le sens de rotation (F) du tambour (1).

2. Dispositif selon la revendication 1, caractérisé en ce que le moyen (9) précité laissant passer le liquide (L) d'un compartiment au compartiment suivant est constitué par des perforations ou grilles réalisées dans la partie précitée de la spire (4) précitée.

3. Dispositif selon la revendication 1 ou 2, caractérisé en ce que le tambour (1) précité est un tambour cylindrique à axe (Y-Y) longitudinal sensiblement horizontal.

4. Dispositif selon l'une des revendications 1 à 3, caractérisé en ce que l'aube (6) précitée est une cloison (7) fixée par un de ses côtés (7a) sur la face interne du cylindre (2) du tambour (1), et formant un angle α compris entre environ 20° et environ 60°, de préférence égal à 40° environ avec le plan diamétral du tambour (1) passant par la ligne de contact entre ledit côté (7a) de l'aube et la face interne du cylindre (2) du tambour (1).

5. Dispositif selon l'une des revendications précédentes, caractérisé en ce que la longueur (1) de l'aube précitée est comprise entre environ 0,3 et environ 0,5 fois le diamètre interne (D) du cylindre (2) précité, de préférence, égale à environ 0,4 fois ledit diamètre (D).

6. Dispositif selon l'une des revendications précédentes, caractérisé en ce que deux aubes (6) successives selon la direction longitudinale du tambour (1), sont fixées de manière décalée angulairement l'une par rapport à l'autre sur le pourtour du tambour (1).

7. Dispositif selon la revendication 6, caractérisé en ce que l'angle β de décalage précité entre deux aubes successives (6) précitées est compris entre environ 90° et environ 270°.

8. Dispositif selon l'une des revendications précédentes, caractérisé en ce que les aubes précitées (6) sont des dièdres dont le côté amont (7) par rapport au sens de rotation (F) du tambour (1) forme l'aube proprement dite, tandis que le côté aval (8) forme un côté de support dudit côté amont (7).

9. Dispositif selon l'une des revendications précédentes, caractérisé en ce que l'hélice (3) ou la vis sans fin est constituée par une bande de matériau, de largeur déterminée, enroulée en forme d'hélice.

10. Dispositif selon l'une des revendications précédentes, caractérisé en ce qu'entre l'extrémité (4P) de l'hélice (3), située du côté de l'alimentation des produits solides (P) dans le tambour (1) précité et la spire adjacente (4a), est disposé un élément (5) formant cloison d'obturation, avantageusement en aval par rapport au sens de rotation (F) du tambour, de la première aube ($6_1$).

11. Dispositif selon l'une des revendications 1 à 10, caractérisé en ce que les alimentations en produits et en liquide sont discontinues.

12. Dispositif selon l'une des revendications 1 à 9, caractérisé en ce qu'un disque annulaire, perforé sur au moins une partie de sa surface, est fixé à l'extrémité (1P) du tambour (1) correspondant à l'alimentation des produits solides (P).

13. Dispositif selon l'une des revendications 1 à 9 et 12, caractérisé en ce que l'alimentation en produits solides (P) est continue, tandis que l'alimentation en liquide (L) est discontinue.

**Claims**

1. Device for treating a flow of solid products in counter-current with a flow of liquid for performing a thermal, physical and/or chemical exchange between these two flows, for instance for cooling vegetables, comprising a drum revolving about its longitudinal axis, a helix or endless screw arranged inside of the said drum and solid in rotation therewith, the edge of each whorl of the helix coming into contact with the inner surface of the drum to define compartments, and products and liquid feeding means for feeding the products and the liquid to each end, respectively, of the said drum, comprising within each one of the said compartments at least one vane-like element secured to the inner face of the drum between two adjacent whorls of the helix for braking the progression of the products in the said drum and a mean letting the liquid pass from one compartment to the following upstream compartment with respect to the direction of progression of the solid products in the drum and retaining the products within the said compartment, characterized in that the said means (9) is formed at each vane (6) in the whorl (4) of the helix (3) located upstream of the associated vane in the direction of progression of the solid products (P) in the drum (1) and is located immediately above and upstream of the top surface of each vane (6) in the direction of rotation (F) of the drum (1).

2. Device according to claim 1, characterized in that the aforesaid means (9) allowing the liquid (L) to pass from one compartment to the next compartment is constituted by perforations or grids formed in the aforesaid portion of the aforesaid whorl (4).

3. Device according to claim 1 or 2, characterized in that the aforesaid drum (1) is a cylindrical drum with a substantially horizontal longitudinal axis (Y-Y).

4. Device according to one of claims 1 to 3, characterized in that the aforesaid vane (6) is a partition (7) secured with one of its sides (7a) to the inner face of the cylinder (2) of the drum (1) and forming an angle α comprised between about 20° and about 60°, preferably equal to about 40° with the diametral plane of the drum (1) passing through the line of contact between the said side (7a) of the vane and the inner side of the cylinder (2) of the drum (1).

5. Device according to one of the foregoing claims, characterized in that the length (1) of the aforesaid vane is comprised between about 0.3 and about 0.5 times the inner diameter (D) of the aforesaid cylinder (2), preferably equal to about 0.4 times the said diameter (D).

6. Device according to one of the preceding claims, characterized in that two successive vanes (6) in the longitudinal direction of the drum (1) are secured in angularly offset relationship with respect to each other onto the periphery of the drum (1).

7. Device according to claim 6, characterized in that the aforesaid offset angle β between two aforesaid successive vanes (6) is comprised between about 90° and about 270°.

8. Device according to one of the foregoing claims, characterized in that the aforesaid vanes (6) are dihedrons the upstream side (7) of which with respect to the direction of rotation (F) of the drum (1) forms the vane proper whereas the downstream side (8) forms a side for supporting the said upstream side (7).

9. Device according to one of the foregoing claims, characterized in that the helix (3) or the endless screw consists of a strip of material of determined width wound in the shape of a helix.

10. Device according to one of the foregoing claims, characterized in that between the end (4P) of the helix (3) located towards the feed of the solid products (P) into the aforesaid drum (1) and the adjacent whorl (4a) is disposed an element (5) forming a closing partition advantageously downstream of the first vane ($6_1$) with respect to the direction of rotation (F) of the drum.

11. Device according to one of claims 1 to 10, characterized in that the feeds of products and liquid are discontinuous.

12. Device according to one of claims 1 to 9, characterized in that an annular disc perforated over at least one part of its surface is secured to the end (1P) of the drum (1) corresponding to the feed of the solid poducts (P).

13. Device according to one of claims 1 to 9 and 12, characterized in that the feed of solid products (P) is continuous whereas the feed of liquid (L) is discontinuous.

## Patentansprüche

1. Vorrichtung zur Behandlung eines Flusses von Feststofferzeugnissen im Gegenstrom zu einem Flüssigkeitsfluss, um einen thermischen, physikalischen und/oder chemischen Tausch zwischen diesen beiden Flüssen zu bewirken, z. B. zur Kühlung von Gemüsen, mit einer um ihre Längsachse umlaufenden Trommel, einer innerhalb der besagten Trommel und mit dieser drehfest verbundenen Wendel bzw. Schnecke, wobei der Rand jeder Windung der Wendel mit der Innenfläche der Trommel in Berührung kommt, um Abteile zu bestimmen, und Mitteln zur Zufuhr von Erzugnissen und Flüssigkeit, um die Erzeugnisse und die Flüssigkeit jeweils jedem Ende der besagten Trommel zuzuführen, mit in jedem der besagten Abteile wenigstens einem an der Innenseite der Trommel zwischen zwei benachbarten Windungen der Wendel befestigten schaufelartigen Element, um den Vorschub der Erzeugnisse in der besagten Trommel zu bremsen und einem die Flüssigkeit von einem Abteil zum nächsten in Bezug auf die Vorschubrichtung der Feststofferzeugnisse in der Trommel stromaufwärts liegenden Abteil durchlassenden und die Erzeugnisse in dem besagten Abteil zurückhaltenden Mittel, dadurch gekennzeichnet, dass das besagte Mittel (9) im Bereich jeder Schaufel (6) in der in der Vorschubrichtung der Feststofferzeugnisse (P) in der Trommel (1) stromaufwärts der zugeordneten Schaufel liegenden Windung (4) der Wendel (3) gebildet ist und unmittelbar oberhalb und stromaufwärts der oberen Fläche jeder Schaufel (6) in der Drehrichtung (F) der Trommel (1) liegt.

2. Vorrichtung nach Anspruch 1, dadurch gekennzeichnet, dass das die Flüssigkeit (L) von einem Abteil zu nachfolgenden Abteil durchlassende Mittel (9) durch in dem vorgenannten Teil der vorgenannten Windung (4) gebildeten Lochungen bzw. Gitter gebildet ist.

3. Vorrichtung nach Anspruch 1 oder 2, dadurch gekennzeichnet, dass die vorgenannte Trommel (1) eine zylindrische Trommel mit im wesentlichen waagerechter Längsachse (Y-Y) ist.

4. Vorrichtung nach einem der Ansprüche 1 bis 3, dadurch gekennzeichnet, dass die vorgenannte Schaufel (6) eine mit einer ihrer Seiten (7a) an der Innenfläche des Zylinders (2) der Trommel (1) befestigte Trennwand (7) ist, die einen zwischen ungefähr 20° und ungefähr 60° liegenden, vorzugsweise ungefähr 40° betragenden Winkel α mit der durch die Berührungslinie zwischen der besagten Seite (7a) der Schaufel und der Innenfläche des Zylinders (2) der Trommel (1) verlaufenden diametralen Ebene der Trommel (1) einschliesst.

5. Vorrichtung nach einem der vorangehenden Ansprüche, dadurch gekennzeichnet, dass die Länge (1) der vorgenannten Schaufel zwischen ungefähr 0,3 und ungefähr 0,5 Mal den Innendurchmesser (D) des vorgenannten Zylinders (2) liegt und vorzugsweise gleich ungefähr 0,4 Mal den besagten Durchmesser (D) ist.

6. Vorrichtung nach einem der vorangehenden Ansprüche, dadurch gekennzeichnet, dass zwei in der Längsrichtung der Trommel (1) aufeinanderfolgende Schaufeln (6) gegeneinander winkelmässig versetzt an dem Umfang der Trommel (1) befestigt sind.

7. Vorrichtung nach Anspruch 6, dadurch gekennzeichnet, dass der vorgenannte Versetzungswinkel β zwischen zwei vorgenannten aufeinanderfolgenden Schaufeln (6) zwischen ungefähr 90° und ungefähr 270° liegt.

8. Vorrichtung nach einem der vorangehenden Ansprüche, dadurch gekennzeichnet, dass die vorgenannten Schaufeln (6) Flächenwinkel sind, deren in Bezug auf die Drehrichtung (F) der Trommel (1) stromaufwärts liegende Seite die eigentliche Schaufel bildet, während die stromabwärts liegende Seite (8) eine die besagte stromaufwärts liegende Seite (7) tragende Seite bildet.

9. Vorrichtung nach einem der vorangehenden Ansprüche, dadurch gekennzeichnet, dass die Wendel (3) bzw. Schnecke durch einen wendelförmig gewickelten Werkstoffstreifen bestimmter Breite gebildet ist.

10. Vorrichtung nach einem der vorangehenden Ansprüche, dadurch gekennzeichnet, dass zwischen dem der Zufuhr der Feststofferzeugnisse (P) in die vorgenannte Trommel (1) zugewandten Ende (4P) der Wendel (3) und der benachbarten Windung (4a) ein eine Verschlusstrennwand bildendes Element (5) vorzugsweise stromabwärts der ersten Schaufel ($6_1$) in Bezug auf die Drehrichtung (F) der Trommel angeordnet ist.

11. Vorrichtung nach einem der Ansprüche 1 bis 10, dadurch gekennzeichnet, dass die Zuführungen von Feststofferzeugnissen und Flüssigkeit unstetig sind.

12. Vorrichtung nach einem der Ansprüche 1 bis 9, dadurch gekennzeichnet, dass eine über wenigstens einen Teil ihrer Oberfläche gelochte Ringscheibe an dem der Zufuhr von Feststofferzeugnissen (P) entsprechenden Ende (1P) der Trommel (1) befestigt ist.

13. Vorrichtung nach einem der Ansprüche 1 bis 9 und 12, dadurch gekennzeichnet, dass die Zufuhr von Feststofferzeugnissen (P) stetig während die Zufuhr von Flüssigkeit (L) unstetig ist.

0 115 456

**FIG. 1**

**FIG. 2**

1

Fig. 3

Fig. 4

Fig. 5

Fig. 6

0 115 456

FIG. 7